Europäisches Patentamt

European Patent Office

Office européen des brevets

(11) Publication number: **0 145 114**
**B1**

# EUROPEAN PATENT SPECIFICATION

(45) Date of publication of patent specification: **22.03.89**     (51) Int. Cl.⁴: **F 16 L 55/10**

(21) Application number: **84305266.3**

(22) Date of filing: **02.08.84**

(54) Pipe freezing device.

(30) Priority: **02.08.83 GB 8320819**
**26.03.84 GB 8407775**

(43) Date of publication of application:
**19.06.85 Bulletin 85/25**

(45) Publication of the grant of the patent:
**22.03.89 Bulletin 89/12**

(84) Designated Contracting States:
**DE FR GB IT NL**

(56) References cited:
**GB-A-1 209 144**
**GB-A-1 303 058**
**US-A-4 309 875**
**US-A-4 370 862**

(73) Proprietor: **Hallett, Ronald**
**37 Glenwood Grove**
**Kingsbury London N.W. 9 (GB)**

(72) Inventor: **Hallett, Ronald**
**37 Glenwood Grove**
**Kingsbury London N.W. 9 (GB)**

(74) Representative: **Luckhurst, Anthony Henry**
**William et al**
**STANLEY, POPPLEWELL, POOLE 57 Lincoln's**
**Inn Fields**
**London WC2A 3LS (GB)**

Courier Press, Leamington Spa, England.

## Description

The present invention relates to pipe freezing devices. Such devices are used for freezing the fluid content of a pipe upstream of, or on both sides of a section which is being worked, so that the pipework does not have to be drained before work begins. More particularly, the invention relates to a portable, pipe freezing device.

The commonly used method of freezing the pipe contents is to feed a coolant gas into a collar surrounding the pipe, the gas being allowed to escape to the atmosphere; a system of this type is described in GB—A—1211960. A major drawback of this system is the wastage of coolant gas, requiring the purchase and transport of large cylinders of the gas. Also if a cylinder is only nearly empty it is necessary to discard it and obtain a replacement before beginning a long job. GB—A—1199188 discloses a system in which a reservoir of liquid is cooled by a refrigerating apparatus, and the cooled liquid is fed through a jacket on the pipe, thus avoiding the loss of coolant. However this system is bulky, requiring both a refrigerating apparatus and a liquid reservoir.

A device having an expansion chamber clamped directly to the pipe is disclosed in GB—A—1209144. In this device propane gas is used as the coolant, with the gas being burnt off after cooling the expansion chamber. There is thus the same disadvantage as described with respect to GB—A—1211960. However, GB—A—1209144 does disclose the use of narrow feed tube formed of stainless steel and housed within part of the length of a larger diameter return tube.

Another device in which a narrow metal feed tube is housed within a return tube is disclosed in US—A—4309875. The device of this US Patent also employs a recirculating refrigerant. A body of water or a bag of freezable jel is interposed between the expansion chamber and the pipe. Because of the use of a recirculating refrigerant, the general arrangement can be considered as an improvement over previous proposals. However, it appears that none of the devices proposed in US—A—4309875 and GB—A—1209144 have been successful in practice.

It is believed that in practice problems are encountered with the use of narrow metal feed tubes. Either the separation of the condenser from the expansion chamber is small or there is a risk of the narrow tubes developing irreversible kinks, which restricts or cuts-off flow therethrough.

The present invention seeks to provide a device which mitigates the disadvantages experienced in the previously proposed systems.

The present invention provides a pipe freezing device comprising; an expansion chamber adapted to be attached to a pipe in a thermally conducting manner and to have a refrigerant recirculated therethrough, a compressor and a condenser, the compressor pumping refrigerant from the expansion chamber to the condenser where the refrigerant is cooled, and from the condenser back to the expansion chamber, the expansion chamber being connected to the compressor and condenser by means of respective elongate tubes, the tube interconnecting the expansion chamber and condenser being enclosed for part of its length within the tube interconnecting the expansion chamber and the compressor, characterised in that the said tube through which the refrigerant is fed from the condenser to the expansion chamber is in the form of a capillary tube which extends substantially the whole distance from the condenser to the expansion chamber, the capillary tube being formed of a flexible plastics material for that part of its length which is enclosed within the other tube which is also flexible and being formed for the remainder of its length by a metal tube.

Preferably the device includes at least two expansion chambers such that the chambers can be connected to a pipe either side of a section to be worked on.

The plastics material from which part of the capillary tube is formed preferably is polytetrafluoroethylene.

Preferably the device includes a portable compressor, a dryer and a condenser, the expansion chamber inlet being connected to the condenser bottom and the outlet being connected to the compressor suction side.

The compressor pumps refrigerant vapour into the condenser. The refrigerant is compressed and condenses, heat is extracted from the condenser, preferably by a motorised fan. The condensed liquid refrigerant then flows into a dryer and then into a liquid tube which is connected to the inlet side of the expansion chamber or freezer block. The refrigerant on entering the chamber as liquid evaporates rapidly removing heat from the surrounding area until all the liquid has evaporated into vapour. The vapour then flows through the chamber outlet to the low pressure suction line or return line to the compressor. The vapour is drawn by suction into the compressor low side through a suction or return valve, is then compressed into the condenser and continues to be recycled continuously until the compressor is switched off.

Preferably the expansion chamber comprises two closed cylinders arranged substantially parallel and opposite to one another, their volumes being connected at a first end by a tube of smaller cross-sectional area.

Where the refrigerant is fed to the expansion chamber through a long capillary tube the tube preferably enters the expansion chamber at the second end of one of the cylindrical bores and passes through the connecting bore to deliver refrigerant at the second end of the other bore. The chamber outlet to the return tube is preferably at the inlet for the capillary tube, hence the expanded refrigerant will pass back through the chambers and connecting bore.

For the capillary to be effective in ensuring that the refrigerant is sufficiently condensed before entering the chamber it should be of a sufficient length, however the chamber should be of limited size to ensure that it can be connected to pipes where there is limited access.

Preferably the expansion chamber is connected to a pipe to be frozen by means of a saddle adapted to fit snugly on the pipe. A set of connecting members may be provided, each to fit a pipe of a particular diameter, such as 28, 22 and 15 mm diameter copper pipes, and iron or lead pipes, and adapted to fit snugly inside the saddle of the chamber.

Preferably the connecting members and the chamber are formed of thermally conducting material such as copper or aluminium.

Embodiments of the invention will now be described in more detail, by way of example only and with reference to the accompanying drawings, in which;

Fig. 1 is a schematic view of a pipe freezing device according to the invention, showing an expansion chamber in cross-section;

Fig. 2 is a perspective view of the expansion chamber of Fig. 1;

Fig. 3 is a perspective view of a saddle for use with the chamber of Figs. 1 and 2;

Fig. 4 is a perspective view of another form of chamber.

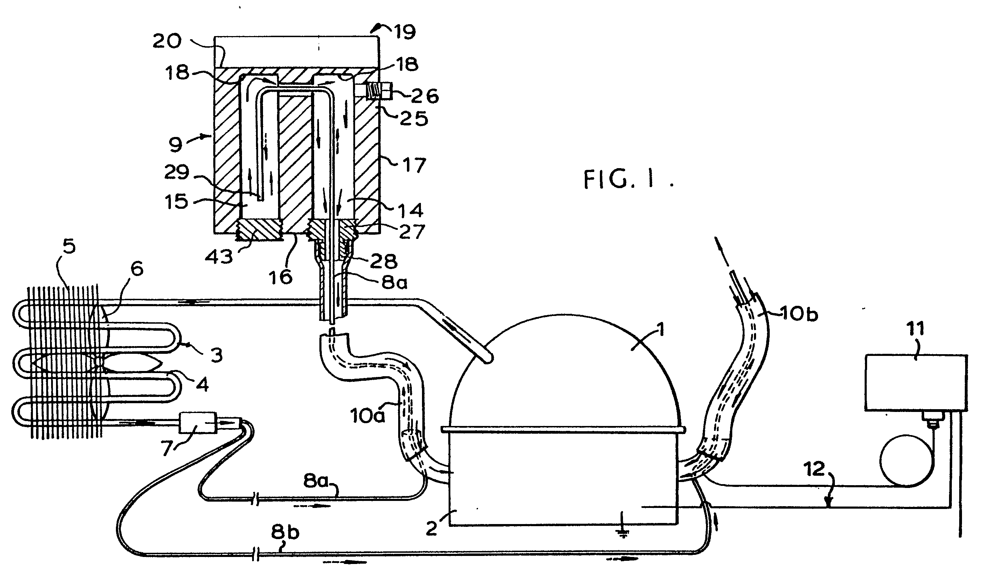

Fig. 1 shows the constituent part of a preferred embodiment of the invention. The parts are not drawn to exact scale, the expansion chamber in particular being shown oversize. A compressor 1 is mounted on a base 2. A condenser 3 is formed from a long sinuous pipe 4 having cooling fins 5 attached to it in known manner and is fed with refrigerant from the compressor 1. A fan 6, powered by an electric motor, draws or blows air over the condenser 3 to cool it. Cooled refrigerant is fed through a filter and dryer 7 to a pair of capillary tubes 8a, 8b. In the described embodiment, the capillary tubes 8a, 8b each comprise a copper capillary, internal diameter about .026 inches (.7 mm) and length 7 metres which is coiled and stored adjacent the compressor, passing into the return tubes 10a, 10b adjacent the compressor, the capillary tubes being brazed to the metallic return tube on the compressor to form a leaktight seal. Thereafter the capillary, and return, tubes are formed of flexible material, being fixed to the metal portions by clips, not shown. The flexible capillary tube is of plastics material, such as polytetrafluoroethylene, having an internal diameter about 1.25 mm. The thick walled return tubes 10a, 10b protect the plastics capillary tubes. The pair of metallic runs of the capillary tubes, between the filter/dryer and compressor may be replaced by a single capillary, being divided to feed into flexible capillary tubes leading to the expansion chambers. The long metallic capillary tube portion serves to restrict the flow of condensed refrigerant. The restricted flow being maintained in the flexible capillary tube portions to avoid premature evaporation of the refrigerant. The capillary tubes 8a, 8b feed the cooled, condensed refrigerant to respective expansion chambers 9, only one is shown in Fig. 1. The refrigerant escapes from the capillary tubes in the expansion chambers and is sucked back into the compressor 1 along return tubes 10a, 10b.

The operation and structure of the expansion chambers 9 will be described in detail hereinafter.

Also shown in Fig. 1 is a temperature control switch 11, in the power supply line 12 to the compressor 1. The switch controls the temperature at the expansion chambers 9 by monitoring rise and fall in the pressure of the refrigerant, which is relative to temperature (e.g. cut out or turn off the compressor 1 when refrigerant pressure is 0 p.s.i. (−21°F) (0 Pa (−29°C)) and turn back on at a pressure of 0+10 p.s.i. (0°F) (0+69 kPa (−18°C)).

A by-pass switch, to by-pass switch 11, is provided to allow the compressor to run continuously to reach very low temperatures.

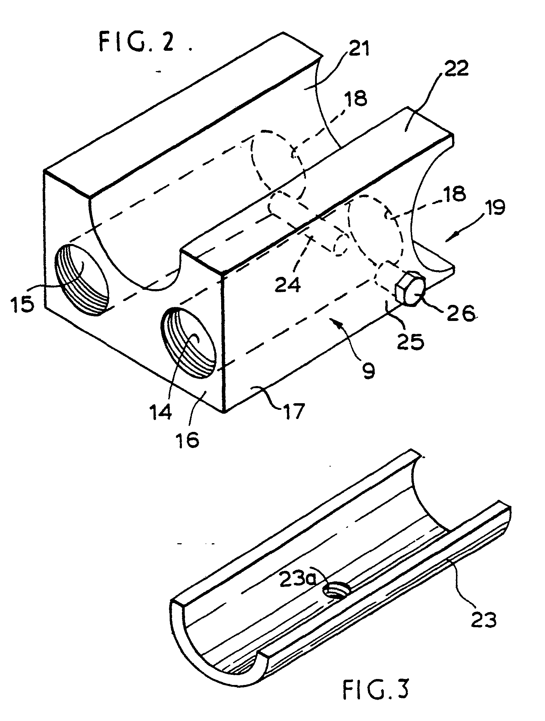

Fig. 2 shows a preferred form of the expansion chamber 9. The chamber is preferably machined from a rolled aluminium block. Two parallel cylindrical bores 14, 15 extend from an end face 16 of a parallelepipedal block 17. The bores are typically 20 mm in diameter and about 60 mm long. The bores are closed at one end 18 by the other end face 19 of the block 17. A substantially semi-cylindrical groove 20 is formed in the end face. A similar groove 21 is formed in a top face 22 of the block. The grooves are sized to receive a pipe to be frozen, for example they may have a radius of curvature of 14 mm. A number of chambers 9, having different size grooves may be provided. However it is preferred that the grooves 20, 21 are arranged to receive saddles 23 (Fig. 3) which have an inner curvature for receiving a pipe of particular diameter, e.g. of diameter 15 mm and an outer curvature to fit snugly into grooves 20, 21. The collars may be held in position by a screw through a central hole 23a, screwed into block 17.

The open end of one bore 15 is closed by a blanking plug (not shown), which is preferably screwed into the bore to allow removal for inspection. The cross bore 24 joining the closed ends 18 of the bores 14, 15 is formed by drilling through a side wall 25. The bore through the wall is closed by a plug 26, which again may be screwed in position to allow removal. The open end of the bore 14 is closed by a member 27 which is screwed into the end of the bore 14. Member 27 has a through hole for the passage of the capillary tube 8a, 8b, and a corrugated projection 28 about which the return pipe 10a is clamped by a clamp (not shown).

The capillary tube 8a extends along the bore 14, through the cross bore 24 and back towards the blanking plug 43. Refrigerant is pumped through the capillary tube 8a to flow out of the end 29 of the tube. The refrigerant then passes back through the bores to return tube 10a. Cooling the metal expansion chamber as it expands and contacts the walls of the bores.

In use the expansion chamber, with an appropriate adapter 23 is clamped to a pipe to be frozen. By providing the grooves 20, 21 in the positions shown the expansion chamber 9 can be readily fitted to pipes in most locations. The end groove 20 is particularly suitable where there is a run of several closely spaced parallel pipes. The expansion chamber may be held on the pipe by a clamp. It is preferred that the grooves 20, 21 subtend an angle of slightly less than 180°. However the collars 23 and or grooves 20, 21 may subtend an angle slightly greater than 180°, to form a snap fit onto a pipe.

It will be appreciated that a single bore may be provided in the block 17, however the configuration with two, or at least two, bores is considered to give improved thermal efficiency. The bores are preferably cylindrical but other shapes may be utilised.

The fittings 23, 26, 27 are preferably of brass.

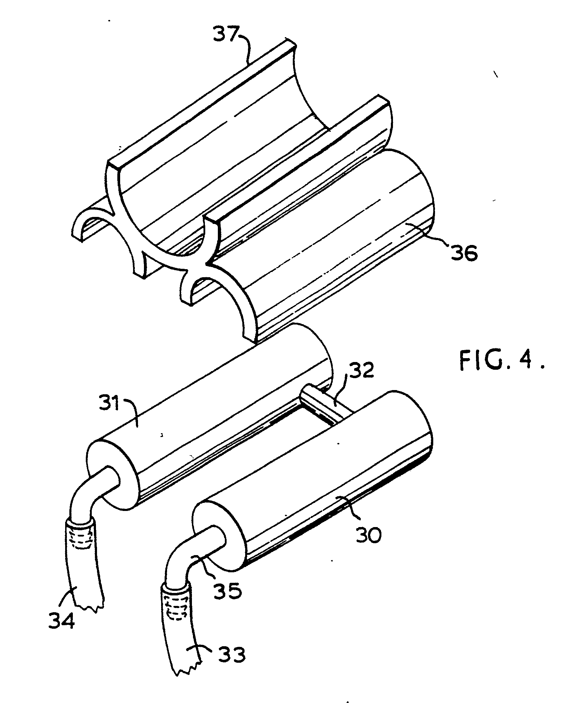

Fig. 4 shows another form of expansion chamber, formed from a pair of cylinders 30, 31 closed at one end and joined by a cross-pipe 32. The other ends of the cylinders receive respectively refrigerant inlet and return pipes 33, 34, a capillary device being provided at the inlet 35. The figure shows a collar arrangement 36 which is slidable onto the cylinders and has a saddle 37 for attachment to a pipe. This embodiment may advantageously be formed from copper tubing.

The compressor may be of 1/6 hp (124 W) low back pressure, and the refrigerant dichlorodifluoromethane. The flexible tubes connecting the expansion chambers are preferably of about 1 m to 2 m in length, but other lengths may be used.

The compressor and condenser are preferably mounted in a portable box and run from mains electricity. Battery operation may be allowed for. Advantageously, the condenser is at one end of the box, with the fan at the other end, which is apertured for the flow of air. The compressor and filter are located between these units so that cooling air is drawn over all the units by the fan. The expansion chambers and connecting pipes 8, 10 may be stored in a tray above the compressor.

The condenser may be in the form of a skin condenser i.e. a thin chamber forming the skin of the portable box.

One or more surfaces of the expansion chamber may be covered with an insulating material to facilitate handling of the chamber whilst it is cold.

The channels 20, 21 and saddles 23 may be sized to fit larger outer diameter pipes, such as iron and lead pipes.

## Claims

1. A pipe freezing device comprising; an expansion chamber (9) adapted to be attached to a pipe in a thermally conducting manner and to have a refrigerant recirculated therethrough, a compressor (1) and a condenser (3), the compressor (1) pumping refrigerant from the expansion chamber (9) to the condenser (3) where the refrigerant is cooled, and from the condensor (3) back to the expansion chamber (9), the expansion chamber being connected to the compressor and condenser by means of respective elongate tubes (8, 10), the tube (8) interconnecting the expansion chamber (9) and condenser (3) being enclosed for part of its length within the tube (10) interconnecting the expansion chamber (9) and the compressor (1), characterised in that the said tube (8) through which the refrigerant is fed from the condenser (3) to the expansion chamber (9) is in the form of a capillary tube (8) which extends substantially the whole distance from the condenser (1) to the expansion chamber (9), the capillary tube (8) being formed of a flexible plastics material for that part of its length which is enclosed within the other tube (10) which is also flexible and being formed for the remainder of its length by a metal tube.

2. A device as claimed in claim 1, further characterised in that the expansion chamber comprises an elongate chamber (14, 15) having an outlet (27) at one end thereof with the refrigerant being released into said chamber (14, 15) at an end (29, 23) distal of said outlet (27) via the capillary (8) which enters the chamber (14, 15) via the outlet (27).

3. A device as claimed in claim 1 or 2, further characterised in that the expansion chamber (9) comprises a pair of substantially parallel elongate bores (14, 15) closed at one end and having their volumes connected at the one end, the chamber outlet (27) being located at the other end of one of the bores (14, 15).

4. A device as claimed in claim 3, further characterised in that a first channel (21) is provided substantially parallel to the bores (14, 15) and a second channel (20) is provided transverse to the first channel and across the closed ends of the bores (14, 15), said channels (20, 21) having a cross-section suitable for receiving a pipe therein.

5. A device as claimed in any one of claims 1 to 4, further characterised in that the expansion chamber (9) is provided with a channel (20, 21) having an arcuate cross-section and in that saddles are provided for fitting into said channel (20, 21) said saddles having a cross-section for receiving a pipe of standard diameter such as 15, 22, or 28 mm.

## Patentansprüche

1. Vorrichtung zum Einfrieren von Rohrleitungen, enthaltend: eine Expansionskammer (9), die in thermisch leitender Weise an einer Rohrleitung anbringbar ist und durch die ein Kühlmittel hindurchführbar ist, einen Kompressor (1) und einen Kondensator (3), wobei der Kompressor (1) Kühlmittel von der Expansionskammer (9) zu dem Kondensator (3) pumpt, wo das Kühlmittel gekühlt wird, und von dem Kondensator (3) zurück zu der Expansionskammer (9), wobei die Expansionskammer mit dem Kompressor und dem Kondensator mittels langgestreckter Rohre (8, 10) verbunden ist, von denen das die Expansionskammer (9) und den Kondensator (3) miteinander verbindende Rohr (8) auf einem Teil seiner Länge innerhalb des die Expansionskammer (9) und den Kompressor (1) miteinander verbindenden Rohres (10) eingeschlossen ist, dadurch gekennzeichnet, daß das besagte Rohr (8), durch welches das Kühlmittel von dem Kondensator (3) zur Expansionskammer (9) geleitet wird, die Form eines Kapillar-Rohres (8) hat, das sich im wesentlichen über den ganzen Weg vom Kondensator (1) zur Expansionskammer (9) erstreckt, wobei das Kapillar-Rohr (8) aus einem flexiblen Kunststoff-Material auf demjenigen Teil seiner Länge der von dem anderen, ebenfalls flexiblen Rohr (10) eingeschlossen ist, gebildet ist und auf seiner restlichen Länge durch ein Metallrohr gebildet ist.

2. Vorrichtung nach Anspruch 1, weiterhin dadurch gekennzeichnet, daß die Expansionskammer eine längliche Kammer (14, 15) aufweist, die an ihrem einen Ende einen Auslaß (27) hat, wobei das Kühlmittel in die besagte Kammer an einem zu dem besagten Auslaß (27) distalen Ende (29, 43) über das Kapillar-Rohr (8), welches in die Kammer (14, 15) über den Auslaß (27) eintritt, eingelassen wird.

3. Vorrichtung nach Anspruch 1 oder 2, weiterhin dadurch gekennzeichnet, daß die Expansionskammer (9) ein Paar von im wesentlichen parallelen, länglichen Bohrungen (14, 15) enthält, die an einem Ende geschlossen sind und deren Räume an dem einen Ende miteinander verbunden sind, wobei sich der Auslaß (27) der Kammer an dem anderen Ende einer der Bohrungen (14, 15) befindet.

4. Vorrichtung nach Anspruch 3, weiterhin dadurch gekennzeichnet, daß eine erste Auskehlung (21) im wesentlichen parallel zu den Bohrungen (14, 15) vorgesehen ist und eine zweite Auskehlung (20) quer zu der ersten Auskehlung und über den geschlossenen Enden der Bohrungen (14, 15) vorgesehen ist, wobei die Auskehlungen (20, 21) einen zur Aufnahme einer Rohrleitung darin geeigneten Querschnitt haben.

5. Vorrichtung nach einem der Ansprüche 1 bis 4, weiterhin dadurch gekennzeichnet, daß die Expansionskammer (9) mit einer einen bogenförmigen Querschnitt aufweisenden Auskehlung (20, 21) versehen ist und daß in die besagte Auskehlung (20, 21) einfügbare Anlageschalen vorgesehen sind, die einen Querschnitt zur Aufnahme einer Rohrleitung mit Standard-Durchmesser, wie etwa 15, 22 oder 28 mm, haben.

**Revendications**

1. Dispositif pour congélation d'un conduit comprenant: une chambre de détente (9) adaptée pour être fixée à un conduit de façon thermiquement conductrice et pour être traversée par un réfrigérant, un compresseur (1) et un condenseur (3), le compresseur (1) pompant le réfrigérant de la chambre de détente (9) jusqu'au condenseur (3) où le réfrigérant est refroidi, et du condenseur (3) de retour à la chambre de détente (9), la chambre de détente étant reliée au compresseur et au condenseur au moyen de tubes respectifs allongés (8, 10), le tube (8), qui relie la chambre de détente (9) et le condenseur (3), étant engagé sur une partie de sa longueur dans le tube (10) reliant la chambre de détente (9) et le compresseur (1), caractérisé par le fait que ledit tube (8) par lequel le réfrigérant est conduit du condenseur (3) jusqu'à la chambre de détente (9) est sous la forme d'un tube capillaire (8) qui s'étend sensiblement sur toute la distance du condenseur (1) jusqu'à la chambre de détente (9), le tube capillaire (8) étant formé en un matériau plastique flexible pour la partie de sa longueur qui est engagée dans l'autre tube (10) qui est aussi flexible et étant formé pour le reste de sa longueur par un tube en métal.

2. Dispositif selon la revendication 1, caractérisé de plus par le fait que la chambre de détente comprend une chambre allongée (14, 15) ayant une sortie (27) à une de ses extrémités, le réfrigérant étant distribué dans ladite chambre (14, 15) à une extrémité (29) éloignée de ladite sortie (27) par le capillaire (8) qui entre dans la chambre (14, 15) par la sortie (27).

3. Dispositif selon la revendication 1 ou 2, caractérisé de plus par le fait que, la chambre de détente (9) comprend une paire d'alésages (14, 15) allongés, sensiblement parallèles, fermés à une extrémité et ayant leurs volumes reliés à cette extrémité, la sortie (27) de la chambre étant située à l'autre extrémité d'un des alésages (14, 15).

4. Dispositif selon la revendication 3, caractérisé de plus par le fait qu'un premier canal (21) est disposé sensiblement parallèlement aux alésages (14, 15) et un second canal (20) est disposé transversalement au premier canal et en travers des extrémités fermées des alésages (14, 15), lesdits canaux (20, 21) ayant une section droite propre à recevoir un conduit en leur intérieur.

5. Dispositif selon l'une quelconque des revendications 1 à 4 caractérisé de plus par le fait que la chambre de détente (9) est munie d'un canal (20, 21) ayant une section droite arquée et que des sièges sont prévus pour s'ajuster dans ledit canal, lesdits sièges ayant une section droite pour recevoir un conduit d'un diamètre standard comme 15, 22, ou 28 mm.

FIG. 1.

FIG. 2 .

FIG. 3

FIG. 4.